# DEMANDE DE BREVET EUROPEEN

(11) **EP 0 750 269 A1**
(43) Date de publication de la demande: **27.12.1996**
(21) Numéro de dépôt: 95109501.7
(22) Date de dépôt: 20.06.1995
(51) Int. Cl.: G06K 7/08, G07C 1/24, G07C 9/00

(54) **Système d'identification d'objets**

(71) Demandeur: EM Microelectronic-Marin SA, CH-2074 Marin (CH)
(72) Inventeur: Fuentes, Vincent, CH-2034 Peseux (CH)
(74) Mandataire: Patry, Didier Marcel Pierre

(57) **Abrégé**

Système d'identification d'objets comprenant un émetteur-récepteur (1) et au moins un répondeur d'identification (30) comportant un dispositif de mémoire (33, 34) pour stocker un code d'identification du répondeur d'identification et des moyens (35, 36, 37, 38) pour engendrer un signal d'identification représentatif du code d'identification de manière que le signal d'identification est modulé par les binaires qui constituent le code d'identification. Ledit émetteur-récepteur comprenant en outre des moyens de (8, 9, 10, 11, 12) réception et d'interprétation dudit signal d'identification. Le répondeur d'identification comprend en outre un générateur de codes variables (32), et des moyens (31) pour écrire dans le dispositif de mémoire (33) un code variable provenant du générateur de codes variables de manière que le code variable constitue au moins une partie du code d'identification. Le code variable peut être constitué, par exemple, par un code aléatoire ou pseudo-aléatoire.

## Description

La présente invention concerne des systèmes d'identification d'objets comportant un émetteur-récepteur et au moins un répondeur d'identification. L'émetteur-récepteur comprend notamment des moyens de transmission d'un signal d'écriture. Le répondeur d'identification comprend notamment des moyens de réception et de détection du signal d'écriture, un dispositif de mémoire pour stocker un code d'identification du répondeur d'identification, et des moyens pour engendrer un signal d'identification représentatif du code d'identification. En outre, l'émetteur-récepteur comprend des moyens de réception et d'interprétation du signal d'identification.

On connaît déjà des systèmes d'identification d'objets du type défini ci-dessus gui sont utilisés lors de courses sportives, d'une part, pour attribuer un code unique à chaque concurrent et, d'autre part, pour détecter l'ordre d'arrivée de ces concurrents. Dans les systèmes d'identification d'objets connus, un répondeur d'identification est attribué à chaque concurrent avant le début de la course. Le répondeur d'identification comporte un dispositif de mémoire dont le contenu est un code d'identification unique.

Lors de l'arrivée de chaque concurrent, un émetteur-récepteur transmet un signal d'interrogation. La détection de ce signal engendre la transmission d'un signal d'identification par le répondeur d'identification en question, ce signal étant représentatif du code d'identification stocké dans son dispositif de mémoire. L'émetteur-récepteur est capable de recevoir et d'interpréter ce signal d'identification pour pouvoir déterminer duquel répondeur d'identification, et donc de quel concurrent, il provient. Ainsi, en identifiant le répondeur d'identification qui appartient à chaque signal d'identification, l'émetteur-récepteur peut déterminer l'ordre d'arrivée des concurrents.

Or, de tels systèmes sont susceptibles d'être abusés par des tiers qui souhaitent manipuler le résultat d'une course. Par exemple, un répondeur d'identification particulier peut être interrogé, avant le début de la course, par un signal d'interrogation non autorisée, ce qui provoquera la transmission préalable du signal d'identification du répondeur d'identification. La démodulation de ce signal d'identification permet la détection de son code d'identification.

Il est relativement facile alors pour un tiers de générer un signal comportant une porteuse modulée par ce code d'identification particulier. La transmission de ce signal dans la zone de réception de l'émetteur-récepteur qui gouverne les résultats de la course en question, avant l'arrivée réelle du concurrent portant le répondeur d'identification contenant ce code d'identification particulier, provoquera l'interprétation fausse que ce concurrent vient de terminer la course.

Pour pallier cet inconvénient, il existe des systèmes d'identification d'objets dans lequel le code d'identification n'est stocké dans le dispositif de mémoire du répondeur d'identification que lors, ou peu de temps avant, le départ du concurrent qui le portera durant la course. Dans ces systèmes d'identification d'objets, l'émetteur-récepteur est adapté, dans un mode de mise en oeuvre, à transmettre un signal d'écriture comportant un code d'écriture suivi d'un code d'identification aléatoire. Ces codes sont constitués par des binaires, l'amplitude du signal d'écriture variant en fonction de l'état logique des binaires.

Lorsqu'un répondeur d'identification détecte ce signal d'écriture, il écrit le code d'identification qui vient de lui être envoyé dans son dispositif de mémoire. Ainsi, il n'est plus possible d'interroger préalablement le répondeur d'identification afin de déterminer son code d'identification car celui-ci n'est pas connu avant le départ de la course.

Toutefois, cette solution n'évite que partiellement l'abus de tels systèmes d'identification d'objets. Il existe toujours le risque qu'un tiers, à l'aide d'un récepteur, puisse capter le signal d'écriture émis par l'émetteur-récepteur lors de la mise en oeuvre d'un répondeur d'identification particulier et, par conséquent, que ce tiers puisse déterminer le code d'identification attribué à un répondeur d'identification particulier. Ce risque se fait particulièrement sentir car le répondeur d'identification est en général un dispositif peu coûteux qui est constitué de composants ne possédant pas une haute sensibilité de détection de signaux. En d'autres termes, les signaux reçus par le répondeur d'identification doivent avoir une variation importante d'amplitude pour que le répondeur d'identification puisse déceler les codes que contiennent ces signaux. Cette grande variation d'amplitude rend le signal d'identification émis par l'émetteur-récepteur d'autant plus décelable par un tiers.

On voit alors que ce tiers peut engendrer relativement facilement un signal permettant de moduler la porteuse émise par l'émetteur-récepteur par ce code d'identification particulier. Comme avant la transmission de ce signal dans la zone de réception de l'émetteur-récepteur, avant l'arrivée réelle du concurrent portant le répondeur d'identification contenant ce code d'identification particulier, provoquera l'interprétation erronée de l'arrivée à l'avance du concurrent et la manipulation non autorisée des résultats de la course.

La présente invention a pour but un système d'identification d'objets qui remédie tout au moins en partie à ces inconvénients.

La présente invention a également pour but un système d'identification d'objets dont la détection non autorisée du code d'identification attribué au répondeur d'identification est rendue plus difficile par rapport aux systèmes d'identification d'objets connus.

La présente invention a ainsi pour objet un système d'identification d'objets comprenant : un émetteur-récepteur d'une première sensibilité de détection de signaux comportant
- des moyens de transmission d'un signal d'écriture; et au moins un répondeur d'identification d'une deuxième sensibilité de détection de signaux moins grande que ladite première sensibilité comportant
- des moyens de réception et de détection dudit signal d'écriture,
- un dispositif de mémoire pour stocker un code d'identification dudit répondeur d'identification, ce code d'identification comportant des binaires pouvant avoir une pluralité d'états logiques,
- des moyens pour engendrer un signal d'identification représentatif du code d'identification de manière que ledit signal d'identification est modulé par l'état logique desdits binaires;
   ledit émetteur-récepteur comprenant en outre des moyens de réception et d'interprétation dudit signal d'identification,
caractérisé en ce que
ledit répondeur d'identification comprend en outre
- un générateur de codes variables, et
- des moyens pour écrire dans ledit dispositif de mémoire, en réponse à la détection dudit signal d'écriture, un code variable provenant dudit générateur de codes variables de manière que ledit code variable constitue au moins une partie dudit code d'identification.

Ainsi, le code d'identification appartenant à chaque répondeur d'identification est d'abord créé dans celui-ci lors de sa mise en oeuvre. Ce code peut être ensuite transmis à l'émetteur-récepteur à l'aide d'un signal d'identification dont la faible modulation rend difficile la détection à distance du code d'identification que comporte ce signal.

D'autres caractéristiques et avantages de l'invention apparaîtront au cours de la description qui va suivre, donnée uniquement à titre d'exemple et faite en se référant aux dessins annexés dans lesquels :
La figure 1 est un schéma bloc d'un émetteur-récepteur faisant partie du système d'identification d'objets selon la présente invention;
La figure 2 est un schéma bloc d'un répondeur d'identification faisant partie du système d'identification d'objets selon la présente invention; et,
La figure 3 est un schéma représentant le code d'écriture engendré par l'émetteur-récepteur de la figure 1 et le code d'identification engendré par le répondeur d'identification de la figure 2.

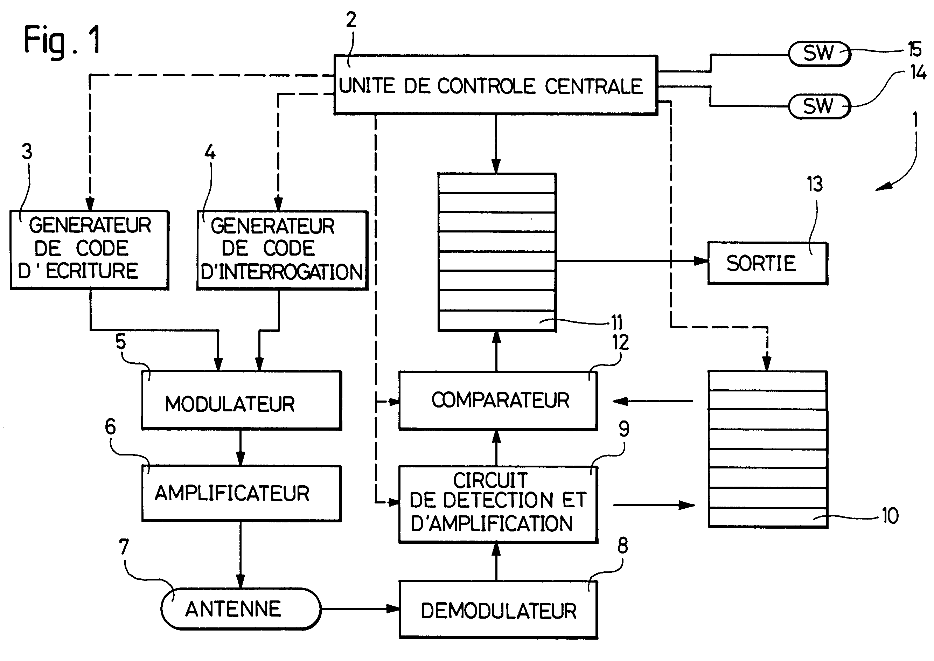

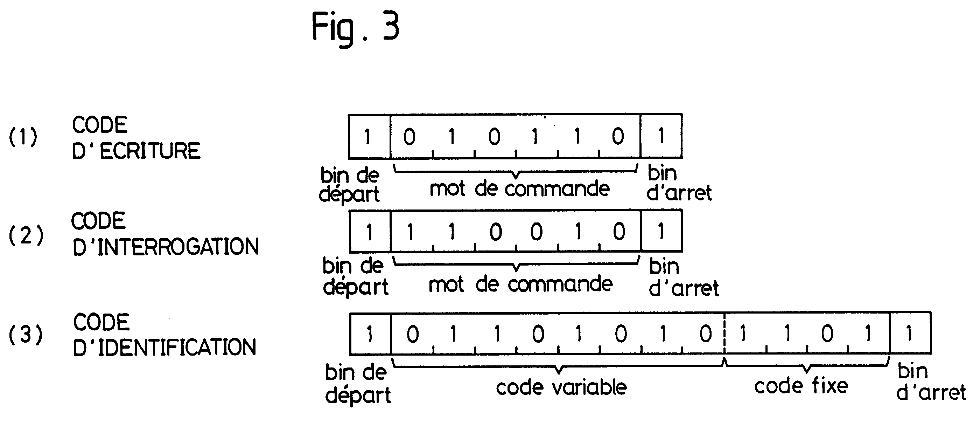

En se référant maintenant à la figure 1, on voit un émetteur-récepteur 1 faisant partie du système d'identification d'objets de la présente invention. L'émetteur-récepteur 1 comprend notamment une unité de contrôle centrale 2, un générateur de code d'écriture 3, un générateur de code d'interrogation 4, un modulateur 5, un amplificateur de puissance 6 et une antenne 7. Lorsqu'il reçoit un signal de commande de l'unité de contrôle centrale 2, le générateur de code d'écriture 3 crée un code d'écriture constitué par des binaires pouvant avoir soit un état logique haut soit un état logique bas. Comme on voit sur la figure 3, le code d'écriture comporte un binaire de départ et un binaire d'arrêt, séparés d'une série de binaires formant un code fixe pouvant être reconnu par des répondeurs d'identification comme mot de commande d'une opération d'écriture.

De même, lorsqu'il reçoit un signal de commande de l'unité de contrôle centrale 2, le générateur de code d'interrogation 4 crée un code d'interrogation constitué par des binaires pouvant avoir soit un état logique haut soit un état logique bas. La figure 3 montre que le code d'interrogation comporte un binaire de départ et un binaire d'arrêt, séparés d'une série de binaires formant un code fixe pouvant être reconnu par des répondeurs d'identification comme mot de commande d'une opération de transmission de leur code d'identification. Le fonctionnement sera expliqué en détail ci-après.

Le modulateur 5 module soit le code d'écriture soit le code d'interrogation provenant respectivement du générateur de code d'écriture 3 et du générateur de code d'interrogation 4 par une modulation d'amplitude. L'amplificateur 6 amplifie ces codes modulés et ensuite les fournit à l'antenne 7 pour transmission. L'amplitude du signal d'écriture et du signal d'interrogation varie en fonction de l'état logique des binaires du code que contiennent ces signaux.

Dans un autre mode de réalisation, l'émetteur-récepteur pourrait également utiliser comme signal d'interrogation de fréquence fixe constante créant ainsi une porteuse à laquelle le répondeur d'identification répond automatiquement. Par exemple, le répondeur d'identification peut modifier soit l'amplitude, soit la fréquence de la porteuse en fonction des binaires du code que le répondeur d'identification transmet.

L'émetteur-récepteur 1 comprend en outre un circuit de démodulation 8, un circuit de détection et d'amplification 9, des dispositifs de mémoire 10 et 11, un comparateur 12 et une sortie 13. Le circuit de démodulation 8 extrait le signal de modulation engendré par le répondeur d'identification et élimine le signal de la porteuse. Ce signal complexe est fourni au circuit de démodulation 8 par l'antenne 7. Le circuit de démodulation 8 transmet un signal de faible amplitude qui est détecté et amplifié par le circuit de détection et d'amplification 9. Ce dernier les fournit, selon un signal de commande provenant de l'unité de contrôle centrale 2, soit au dispositif de mémoire 10 soit au comparateur 12.

Les dispositifs de mémoire 10 et 11 sont de préférence des mémoires volatiles, par exemple des mémoires vives. Ces mémoires comportent suffisamment de registres pour pouvoir stocker des codes d'identification correspondant à tous les concurrents de la course pour laquelle le système d'identification d'objets est destiné. L'accès aux registres, pour la lecture et l'écriture des codes d'identification, est contrôlé par l'unité de contrôle centrale 2.

Le comparateur 12 compare les signaux démodulés, c'est-à-dire les codes d'identification des répondeurs d'identification, avec les codes stockés dans le dispositif de mémoire 10. Lorsqu'il y une coïncidence entre le code d'identification reçu à l'aide de l'antenne et un des codes d'identification stockés dans le dispositif de mémoire 10, le comparateur 12 fournit ce code au dispositif de mémoire 11. L'unité de contrôle centrale 2 règle le registre dans le dispositif de mémoire 11 auquel on peut accéder de sorte que les codes d'identification reçus par l'émetteur-récepteur 1 sont stockés dans leur ordre d'arrivée. L'accès au contenu du dispositif de mémoire 11 est rendu possible par la sortie 13.

L'émetteur-récepteur 1 comprend également deux commutateurs de commande 14 et 15. Grâce à ces derniers, l'utilisateur peut sélectionner deux modes de fonctionnement du système d'identification d'objets, à savoir un mode de mise-en-oeuvre et un mode de fonctionnement réguliers. Ces modes de fonctionnement seront expliquées en détail plus loin.

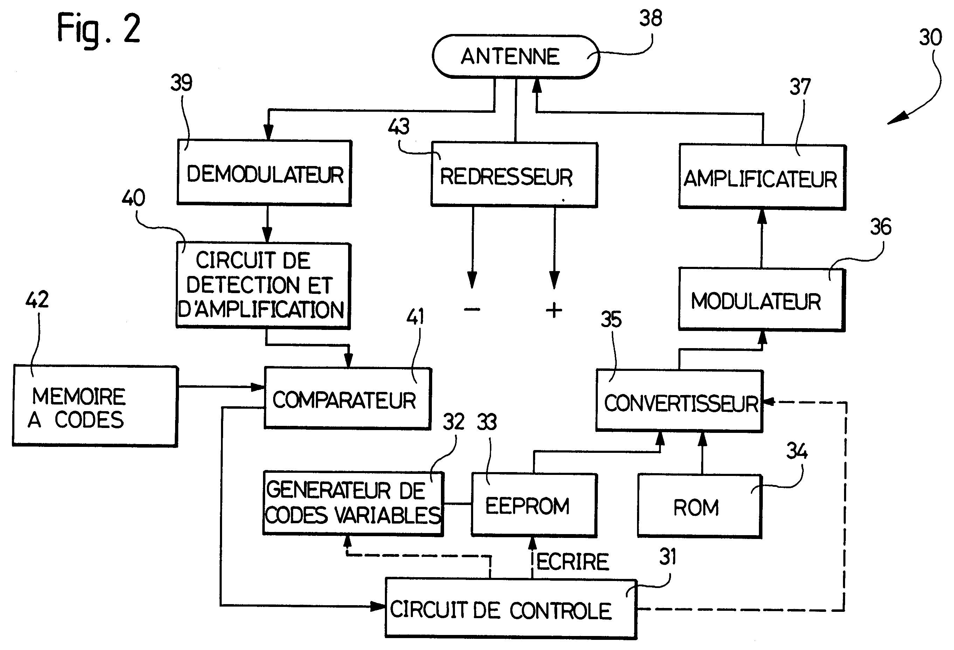

La figure 2 montre un schéma d'un répondeur d'identification 30 destiné à être utilisé en conjonction avec l'émetteur-récepteur de la figure 1. Le répondeur d'identification 30 comprend notamment un circuit de contrôle 31, un générateur de codes variables 32, deux dispositifs de mémoire 33 et 34, un convertisseur de codes 35, un modulateur 36, un amplificateur 37, une antenne 38, un démodulateur 39, un circuit de détection et d'amplification 40, un comparateur 41 et une mémoire à codes 42 et un redresseur 43 permettant l'alimentation des composants du répondeur d'identification par couplage électromagnétique. Les composants susmentionnés du répondeur d'identification 30 sont en général peu coûteux et d'une sensibilité de détection de signaux limitée par rapport à l'émetteur-récepteur 1.

L'antenne 38 permet, d'une part, l'alimentation au répondeur d'identification, à l'aide du redresseur 43, et, d'autre part, la réception par le répondeur d'identification 30 des signaux d'écriture et d'interrogation transmis par l'émetteur-récepteur 1. Ces signaux sont ensuite fournis au démodulateur 39. Ce dernier extrait le signal de modulation engendré par l'émetteur-récepteur et élimine le signal de la porteuse. Le démodulateur 39 transmet un signal de faible amplitude qui est détecté et amplifié par le circuit de détection et d'amplification 40.

La mémoire à codes 42 stocke des codes d'écriture et d'interrogation auxquels le répondeur d'identification réagit. Le comparateur 41 compare le code à la sortie du circuit de détection et d'amplitude 40 aux codes stockés dans la mémoire à codes 42. Le cas échéant, le comparateur 41 envoie à sa sortie un signal de coïncidence au circuit de contrôle 31, ce signal indiquant soit qu'un code d'écriture soit qu'un code d'interrogation vient d'être reçu par le répondeur d'identification 30.

Dans un autre mode de réalisation, l'émetteur-récepteur pourrait utiliser comme signal d'interrogation une fréquence fixe constante créant ainsi une porteuse à laquelle le répondeur d'identification répond automatiquement. L'homme du métier peut également envisager d'autres moyens pour enclencher l'écriture du code d'identification dans le répondeur d'identification.

Le générateur de codes variables 32 crée un code variable à sa sortie en réponse à un signal de commande provenant du circuit de contrôle 31. De préférence, le code variable engendré par le générateur 32 est un code aléatoire ou pseudo-aléatoire. De préférence, le générateur de codes aléatoires 32 est constitué par un circuit simple à réaliser, tel qu'un dispositif de comptage dont le contenu augmente ou diminue de manière asynchrone par rapport à l'instant de transmission du signal d'écriture par l'émetteur-récepteur 1. De plus, ledit dispositif de comptage peut être agencé de manière que son contenu n'est pas remis à zéro lors du démarrage de la partie électronique du répondeur d'identification 30.

Le dispositif de mémoire 33 est destiné à stocker le code aléatoire engendré par le générateur de codes variables 32. De préférence constitué par une mémoire non volatile, tel qu'une mémoire reprogrammable effaçable électriquement, le code aléatoire est stocké dans le dispositif de mémoire 33 en réponse à un signal de commande provenant du circuit de contrôle 31.

Par contre, le dispositif de mémoire 34 est destiné à stocker un code fixe qui est connu avant le départ de la course en question. Le dispositif de mémoire 34 peut être constitué, par exemple, par une mémoire morte. Dans un autre mode de réalisation, le dispositif de mémoire 39 peut même incorporer le dispositif de mémoire 33.

Le convertisseur 35 convertit le code variable et le code fixe stockés respectivement dans les dispositifs de mémoire 33 et 34 en un code d'identification, tel que représenté sur la figure 3. Ce code d'identification est constitué, par exemple, par un binaire de départ, suivi par le code aléatoire du dispositif de mémoire 33, le code fixe du dispositif de mémoire 34 et finalement par un binaire d'arrêt. Le code variable et le code fixe forment ensemble une série de binaires pouvant être reconnue par l'émetteur-récepteur 1 comme mot permettant l'identification du répondeur d'identification 30. Le code d'identification fourni par le convertisseur 35 est ensuite modulé par le modulateur 36. Le signal d'identification résultant est amplifié par l'amplificateur 39 pour transmission par l'antenne 38. L'amplitude du signal d'identification varie en fonction de l'état logique des binaires du code que contient ce signal.

Le fonctionnement du système d'identification d'objets comportant l'émetteur-récepteur 1 et le répondeur d'identification 30 va maintenant être décrit dans ses deux modes de fonctionnement.

Le premier de ces modes de fonctionnement est appelé le mode de mise en oeuvre. Le système d'identification d'objets est mis dans ce mode avant le départ de la course en question afin de engendrer un code d'identification dans chaque répondeur d'identification et de communiquer ce code d'identification à l'émetteur-récepteur du système. Lorsque le commutateur de commande 14 de l'émetteur-récepteur 1 est actionné, l'unité de contrôle centrale enclenche le générateur de code d'écriture 3. Le code d'écriture engendré à la sortie de ce dernier est modulé et amplifié respectivement par le modulateur 5 et l'amplificateur 6. Le signal d'écriture ainsi créé est ensuite transmis par l'antenne 7.

A cause de la faible sensibilité de détection de signaux des composants qui constitue le répondeur d'identification, le générateur de code d'écriture 3, le générateur de code d'interrogation 4, le modulateur 5 et l'amplificateur 6 sont agencés de manière que l'amplitude des signaux d'interrogation et de transmission lors de leur transmission varie, en fonction de l'état logique des binaires qui constituent les codes d'écriture et d'interrogation, d'une valeur importante. Dans des systèmes d'identification d'objets réalisés dans le cadre de la présente invention, on a trouvé qu'une variation d'amplitude supérieure à 15 volts représente une valeur convenable. De préférence, cette variation d'amplitude des signaux d'interrogation et de transmission lors de leur transmission est supérieure à 200 volts. Des expériences pratiques ont également montré qu'une amplitude maximale, lors de la transmission des signaux d'interrogation de d'écriture, qui est supérieure à 15 volts aide la réception de ces signaux par le répondeur d'identification 30.

Le signal d'écriture est donc capté par l'antenne 38 du répondeur d'identification 30 et, après sa démodulation et son amplification respectivement par le démodulateur 39 et par le circuit de détection et d'amplification 40, le code d'écriture est extrait de ce signal. Le comparateur 41 compare le code détecté avec les codes stockés dans la mémoire à codes 42 et, puisqu'il y aura une coïncidence entre le code d'écriture stocké dans la mémoire 42 et le code d'écriture reçu à l'aide de l'antenne 38 en ce cas, un signal représentatif de cette coïncidence sera fourni au circuit de contrôle 31.

Ensuite, le circuit de contrôle 31 fournit un signal de commande au dispositif de comptage 32 pour arrêter la variation de son contenu. Un mot binaire correspondant à ce contenu est écrit dans la mémoire reprogammable effaçable électriquement 33.

Après cette écriture, le convertisseur 35 convertit les mots binaires stockés dans les dispositifs de mémoire 33 et 34 en un code d'identification, tel que le code d'identification représenté sur la figure 3. Ce code d'identification sera utilisé, lors du mode de fonctionnement régulier, par l'émetteur-récepteur 1 pour pouvoir identifier le répondeur d'identification 30. Le code d'identification à la sortie du convertisseur 35 est ensuite modulé par le modulateur 36. Le signal d'identification résultant est amplifié par l'amplificateur 37 pour transmission par l'antenne 38.

Puisque l'émetteur-récepteur 1 a une sensibilité de détection de signaux plus grande que celle du répondeur d'identification 30, et pour empêcher la détection non autorisée du signal d'identification transmis par le répondeur d'identification 30, le modulateur 36 et l'amplificateur 37 sont agencés de manière que la variation d'amplitude du signal d'identification, lors de sa transmission, est inférieure à la variation d'amplitude des signaux d'interrogation et de transmission lors de leur transmission. Dans des systèmes d'identification d'objets réalisés dans le cadre de la présente invention, on a trouve qu'une variation d'amplitude lors de la transmission du signal d'identification inférieure à 15 volts est convenable. De préférence, la variation d'amplitude est comprise entre 1 et 10 volts. Des expériences pratiques ont également montré qu'une amplitude maximale inférieure à 15 volts, lors de la transmission dudit signal d'identification, est préférable.

L'émetteur-récepteur 1 détecte le signal d'identification transmis par le répondeur d'identification 30 à l'aide de son antenne 7. Le circuit de démodulation 8 extrait le code d'identification et ensuite le fournit au circuit de détection et d'amplification 9. Ce dernier l'amplifie et le fournit, selon un signal de commande provenant de l'unité de contrôle centrale 2, au dispositif de mémoire 10 pour stockage. L'adresse dans le dispositif de mémoire 10 auquel chaque code d'identification est stocké est déterminée par l'unité de contrôle centrale 2.

Le deuxième mode de fonctionnement est appelé le mode de fonctionnement régulier. Le système d'identification d'objets est mis dans ce mode lors l'arrivée de chaque concurrent afin d'interroger son répondeur d'identification et de provoquer la transmission de son code d'identification à l'émetteur-récepteur du système. Lorsque le commutateur à commande 15 de l'émetteur-récepteur 1 est actionné, l'unité de contrôle centrale enclenche le générateur de code d'interrogation 4. Le code d'interrogation engendré à la sortie de ce dernier est modulé et amplifié respectivement par le modulateur 5 et l'amplificateur 6. Le signal d'interrogation ainsi créé est ensuite transmis par l'antenne 7. Dans un autre mode de réalisation, le signal d'interrogation peut être composé uniquement par la présence d'une fréquence porteuse d'amplitude fixe.

Ce signal d'interrogation est capté par l'antenne 38 du répondeur d'identification 30 et, après sa démodulation et son amplification respectivement par le démodulateur 39 et par le circuit de détection et d'amplification 40, le code d'interrogation est extrait de ce signal. Le comparateur 41 compare le code détecté avec les codes stockés dans la mémoire à codes 42 et, puisqu'il y aura une coïncidence entre le code d'interrogation stocké dans la mémoire 42 et le code d'interrogation reçu à l'aide de l'antenne 38 en ce cas, un signal représentatif de cette coïncidence sera fourni au circuit de contrôle 31.

Ensuite, le circuit de contrôle 31 fournit un signal de commande au convertisseur 35 pour que ce dernier convertisse les mots binaires stockés dans les dispositifs de mémoire 33 et 34 en son code d'identification. Le code d'identification à la sortie du convertisseur 35 est ensuite modulé par le modulateur 36. Le signal d'identification résultant est amplifié par l'amplificateur 37 pour transmission par l'antenne 38.

L'émetteur-récepteur 1 détecte le signal d'identification transmis par le répondeur d'identification 30 à l'aide de son antenne 7. Le circuit de démodulation 8 extrait le code d'identification et ensuite le fournit au circuit de détection et d'amplification 9. Ce dernier fournit le signal d'identification amplifié selon un signal de commande provenant de l'unité de contrôle centrale 2, au comparateur 12.

Le comparateur 12 compare le signal d'identification démodulé, c'est-à-dire le code d'identification transmis par le répondeur d'identification 30, avec les codes stockés dans le dispositif de mémoire 10. Puisqu'il y aura une coïncidence entre le code d'identification reçu à l'aide de l'antenne et un des codes d'identification stockés dans le dispositif de mémoire 10, code qui était stocké dans la mémoire 10 dans le mode de mise en oeuvre, le comparateur 12 fournit ce code au dispositif de mémoire 11 pour stockage dans son ordre d'arrivée. Dans un autre mode de réalisation, il pourrait convenir de stocker dans le dispositif de mémoire 11 l'heure d'arrivée ou d'autres informations correspondant à chaque répondeur d' identification.

Enfin, il est à noter que plusieurs modifications et/ou améliorations peuvent être apportées au système d'identification d'objets selon l'invention sans sortir du cadre de celle-ci.

En outre, il est clair que le système d'identification d'objets de la présente invention ne s'applique pas uniquement aux concurrents humains participant dans une course, mais trouve également des applications dans de nombreux autres domaines. A titre d'exemple, le système d'identification d'objets peut être utilisé pour identifier des concurrents animaux participant à une course.

L'invention pourrait également être utilisée dans le cadre d'un système de sécurité, par exemple, pour contrôler l'accès à une certaine zone de sécurité. Chacune des personnes autorisées à accéder cette zone peut être munie d'un répondeur d'identification. L'émetteur-récepteur peut être monté près d'une porte d'entrée qui est déverrouillée uniquement lorsque le code d'identification d'un répondeur d'identification autorisé est détectée.

L'homme du métier n'aura pas de difficulté en particulier à envisager d'autres modes de réalisation et d'autres applications de l'invention de ce genre.

Tandis que le mode de réalisation décrit ci-dessus utilise une modulation de l'amplitude des signaux transmis par l'émetteur-récepteur et le répondeur d'identification, il est également possible d'effectuer une modulation de la fréquence ou d'autre type de modulation de ces signaux.

## Revendications

1. Système d'identification d'objets comprenant : un émetteur-récepteur (1) d'une première sensibilité de détection de signaux comportant
- des moyens (4, 5, 6, 7) de transmission d'un signal d'écriture; et au moins un répondeur d'identification (30) d'une deuxième sensibilité de détection de signaux moins grande que ladite première sensibilité comportant
- des moyens (39, 40) de réception et de détection dudit signal d'écriture,
- un dispositif de mémoire (33, 34) pour stocker un code d'identification dudit répondeur d'identification, ce code d'identification comportant des binaires pouvant avoir une pluralité d'états logiques,
- des moyens (35, 36, 37, 38) pour engendrer un signal d'identification représentatif du code d'identification de manière que ledit signal d'identification est modulé par l'état logique desdits binaires;
ledit émetteur-récepteur comprenant en outre des moyens de (8, 9, 10, 11, 12) réception et d'interprétation dudit signal d'identification,
caractérisé en ce que
ledit répondeur d'identification comprend en outre
- un générateur de codes variables (32), et
- des moyens (31) pour écrire dans ledit dispositif de mémoire (33), en réponse à la détection dudit signal d'écriture, un code variable provenant dudit générateur de codes variables de manière que ledit code variable constitue au moins une partie dudit code d'identification.

2. Système d'identification d'objets selon la revendication 1, caractérisé en ce que ledit générateur de codes variables (32) est constitué par un générateur de codes aléatoires ou pseudo-aléatoires.

3. Système d'identification d'objets selon la revendication 1, caractérisé en ce que
lesdits moyens (35, 36, 37, 38) pour engendrer un signal d'identification sont agencés de manière que ledit signal d'identification est modulé en amplitude par l'effet logique des binaires qui constituent ledit code d'identification.

4. Système d'identification d'objets selon l'une quelconque des revendications précédentes, caractérisé en ce que ledit répondeur d'identification comprend en outre des moyens (35, 36, 37) de modulation et d'amplification destinés à moduler une porteuse avec ledit code d'identification afin d'engendrer ledit signal d'identification.

5. Système d'identification d'objets selon la revendication 4, caractérisé en ce que
lesdits moyens (36, 37) de modulation et d'amplification sont agencés de manière que ladite variation d'amplitude lors de la transmission dudit signal d'identification est inférieure à 15 volts.

6. Système d'identification d'objets selon la revendication 5, caractérisé en ce que
ladite variation d'amplitude est comprise entre 1 et 10 volts.

7. Système d'identification d'objets selon l'une quelconque des revendications 5 ou 6, caractérisé en ce que
l'amplitude maximale lors de la transmission dudit signal d'identification est inférieure à 15 volts.

8. Système d'identification d'objets selon l'une quelconque des revendications précédentes, caractérisé en ce que
lesdits moyens de transmission d'un signal d'écriture (3) sont agencés de manière que ladite variation d'amplitude du signal d'écriture lors de sa transmission est supérieure à 15 volts.

9. Système d'identification d'objets selon la revendication 8, caractérisé en ce que
ladite variation d'amplitude du signal d'écriture lors de leur transmission est supérieure à 200 volts.

10. Système d'identification d'objets selon l'une quelconque des revendications 8 ou 9, caractérisé en ce que
l'amplitude maximale lors de la transmission dudit signal d'écriture est supérieure à 15 volts.

11. Système d'identification d'objets selon l'une quelconque des revendications précédentes, caractérisé en ce que
ledit générateur de codes variables (32) est constitué par un dispositif de comptage dont le contenu varie de manière asynchrone par rapport à la transmission dudit signal d'écriture.

12. Système d'identification d'objets selon la revendication 11, caractérisé en ce que
ledit dispositif de comptage (32) est agencé de manière que son contenu n'est pas remis à zéro lors du démarrage.

13. Système d'identification d'objets selon l'une quelconque des revendications précédentes, caractérisé en ce que
ledit dispositif de mémoire (33, 34) est constitué au moins partiellement par une mémoire non volatile (33) destinée à stocker ledit code aléatoire.

14. Système d'identification d'objets selon l'une quelconque des revendications précédentes, caractérisé en ce que
ledit code d'identification stocké dans ledit dispositif de mémoire comporte, en plus dudit code aléatoire, un code qui peut être déterminé avant la réception dudit signal d'écriture par ledit répondeur d'identification.

15. Système d'identification d'objets selon la revendication 14, caractérisé en ce que
ledit dispositif de mémoire (33, 34) est constitué en outre par une mémoire volatile destinée à stocker ledit code qui peut être déterminé avant la réception dudit signal d'écriture.
